# EUROPEAN PATENT SPECIFICATION

(11) **EP 1 532 301 B1**
(45) Date of publication and mention of the grant of the patent: **28.11.2007**
(21) Application number: 03791051.0
(22) Date of filing: 29.08.2003
(51) Int. Cl.: D01F 9/127, B01J 23/745, B01J 23/755, C22B 5/20

(54) **METHOD FOR THE PRODUCTION OF CATALYSTS**
VERFAHREN ZUR HERSTELLUNG VON KATALYSATOREN
PROCEDE POUR LA PRODUCTION DE CATALYSEURS

(30) Priority: 29.08.2002 GB 0220135; 26.08.2003 GB 0319941
(43) Date of publication of application: 25.05.2005
(73) Proprietor: Statoil ASA, 4035 Stavanger (NO)
(72) Inventor: EDWIN, Emil, N-4035 Stavanger (NO); ARNESEN, Tore, N-4035 Stavanger (NO); JOHANSEN, Johan, Arnold, N-0377 Oslo (NO); AASER, Knut, Ivar, N-4035 Stavanger (NO)
(74) Representative: Cockbain, Julian
(86) International application number: PCT/GB2003/003753
(87) International publication number: WO 2004/020714

(56) References cited:
- WO-A-03/097910
- US-A- 3 780 137
- US-A- 5 165 909
- DATABASE WPI Section Ch, Week 200035 Derwent Publications Ltd., London, GB; Class J04, AN 2000-406983 XP002264915 & JP 2000 143220 A (SHIMADZU CORP) 23 May 2000 (2000-05-23)

## Description

This invention relates to carbon products, in particular carbon nanofibre products, and their use in the production of metals and alloys.

The production of metals and alloys, including pseudometals, pseudometal alloys and semiconductors (e.g. silicon, ferrosilicon, etc), frequently involves the reduction of a metal compound (e.g. an oxide or sulphide) using carbon.

Thus for example in the production of silicon, silica (e.g. quartz) and a carbon material (e.g. coke, coal or charcoal) are introduced in the top of a furnace, e.g. an electric reduction furnace having submerged carbon electrodes and the silica is reduced and the carbon oxidized. This can be written simplistically as

SiO₂ + 2C → Si + 2CO

More precisely, the reaction involves the intermediate formation of SiO and SiC which react to give Si and CO at a temperature of about 2000°C.

Likewise carbon is used as a reductant in the production of aluminium by carbothermic reduction of alumina. In this process, described in WO 00/40767 (the content of which is hereby incorporated by reference), alumina is heated with carbon to produce aluminium metal. The metal product contains aluminium carbide as a contaminant but this can be precipitated out of the molten metal by addition of scrap aluminium.

The carbon used in these processes, coming as it originally does from a biological source, must meet various purity requirements as impurities in the carbon lead to impurities in the metal product. Where, for example, silicon is being produced for use in the electronics industry, these purity requirements are especially stringent.

We have now found that carbon nanofibres are particularly suited for use in metal ore reduction.

It has long been known that the interaction of hydrocarbon gas and metal surfaces can give rise to dehydrogenation and the growth of carbon "whiskers" on the metal surface. More recently it has been found that such carbon whiskers, which are carbon fibres having a diameter of about 3 to 100 nm and a length of about 0.1 to 1000 µm, have the ability to act as reservoirs for hydrogen storage (see for example Chambers et al. in J.Phys.Chem. B 102: 4253-4256 (1998) and Fan et al. in Carbon 37: 1649-1652 (1999)).

Several researchers have sought to produce these carbon nanofibres (CNF) and to investigate their structure, properties and potential uses and such work is described in a review article by De Jong et al in Catal. Rev. - Sci. Eng. 42: 481-510 (2000). De Jong suggests that the possible uses for CNF fall into four categories: as electrical components; as polymer additives; for gas storage; and as catalyst supports. Their use as reducing agents is not suggested and, given the relative complexity of their production as compared with the production of coal, coke or charcoal, it is clear that this use has not previously been envisaged.

As described by De Jong et al. (supra) and in a further review article by Rodriguez in J. Mater. Res. 8: 3233-3250 (1993), transition metals such as iron, cobalt, nickel, chromium, vanadium and molybdenum, and their alloys, catalyse the production of CNF from gases such as methane, carbon monoxide, synthesis gas (ie H₂/CO), ethyne and ethene. In this reaction, such metals may take the form of flat surfaces, of microparticles (having typical sizes of about 100 nm) or of nanoparticles (typically 10-50 nm in size) supported on an inert carrier material, eg silica or alumina. The metal of the catalyst must be one which can dissolve carbon or form a carbide.

Both De Jong et al (supra) and Rodriguez (supra) explain that carbon absorption and CNF growth is favoured at particular crystallographic surfaces of the catalyst metal.

The gas used for the production of CNF may be any carbon-containing gas suitable for CNF production, e.g. C₁₋₃ hydrocarbons (such as for example methane, ethene, ethyne, etc.), carbon monoxide, synthesis gas etc. Preferably the gas is, or comprises methane, e.g. in the form of natural gas.

The particular suitability of CNF for metal ore reduction arises for three reasons: the growth of CNF involves diffusion of carbon through the metal catalyst, effectively minimizing the presence of impurities within the CNF itself; the metal catalyst and any catalyst support can be selected from materials whose presence in the ore reducing reaction does not lead to unwanted impurities in the metal product; and if desired the metal catalyst and/or the catalyst support may readily be removed from the CNF before it is used for ore reduction.

JP-A-2000143220 discloses a method for the removal of impurities from carbon by reacting the contaminated carbon with carbon monoxide. The resulting carbonyls are then thermally decomposed.

As will be clear from the discussion above, the term metal as used herein embraces metals comprising one or more than one element as well as semiconductors and other materials which are "metallic" in some but not all properties, and in particular, the term metal should be understood to include alloys. The metals produced as described herein may be any metal normally produced by carbothermic reaction, including iron, silicon, aluminium and iron alloys like ferrosilicon, ferromanganese, ferronickel, ferrochromium and others. The metal produced as described herein preferably comprises silicon or aluminium and particularly preferably is silicon, ferrosilicon (FeSi), or aluminium, and especially is such a metal intended for use in electronic components.

The CNF used to reduce the metal ore may or may not contain a catalyst and/or a catalyst support used in its own production. Where the metal being produced as described herein comprises silicon, the CNF used is preferably CNF prepared using a silica-supported catalyst (as removal of the catalyst support from the CNF is thus unnecessary). Likewise, where the metal being produced is aluminium, the CNF used is preferably CNF prepared using an alumina-supported catalyst. Moreover, where the metal being produced is hafnium, titanium or zirconium (metals which are important as catalysts in the polymer industry), the CNF used is preferably CNF prepared using a hafnium oxide, titania or zirconia supported catalyst.

Where the metal being produced as described herein does not contain silicon or aluminium (or should not contain undue levels of silicon or aluminium), the CNF used can be produced using a silica or alumina supported catalyst with the support being removed from the CNF before it is used in the ore reduction. Alternatively and preferably however the CNF will be produced using an unsupported metal catalyst or a metal catalyst supported on a particulate support which does not contribute undesired levels of impurity. Such a particulate support may for example be a polymer (preferably a sulphur, phosphorus and boron-free polymer), carbon (e.g. CNF) or an inorganic compound (preferably an oxide, carbide or nitride) the elemental components of which will not contribute undesired levels of impurity, e.g. an oxide of the element or one of the elements of the metal being produced. Such supports are preferably porous, or more particularly they preferably have a surface area which is higher than that of a smooth sphere of the same particle size, preferably at least 20 times higher. In general, such particulate supports will desirably not consist of compounds of sulphur, phosphorus or boron.

Where the metal being produced by reduction using CNF comprises a transition metal in which carbon can dissolve or which can form carbides, it is especially preferred that that same metal be used as the catalyst for the preparation of the CNF for use in the ore reduction reaction, as in this way removal of the metal catalyst from the CNF is unnecessary. Thus for example for the production of ferrosilicon for use in electronics components, it is preferred that the CNF be produced using an iron on silica or iron on CNF catalyst.

The production of CNF suitable for use according to the present invention is described in detail in British Patent Application No. 0211789.3 and International Patent Application No. PCT/GB03/002221 published as WO/03 097910 (copies of which are filed herewith) the contents of which are hereby incorporated by reference.

However, as previously mentioned, the CNF used contains residues of the metal catalyst used in CNF production. Such metal catalysts may be unsupported or supported, preferably supported, more preferably silica-supported. The catalyst metal preferably comprises at least one metal selected from nickel and iron.

Where it is desired to remove catalyst metal or catalyst support from the CNF before it is used in ore reduction as described herein, this may be effected for example by acid or base treatment and/or by heat treatment, e.g. to a temperature above 1000°C, preferably above 2000°C, for example 2200 to 3000°C. Thus for example heat treatment of CNF containing 1% wt nickel at 2500°C reduced the nickel content to 0.0017% wt. Alternatively, the catalyst metal may be removed from the CNF by treatment with carbon monoxide to generate volatile metal carbonyls. This will typically involve treatment with carbon monoxide at elevated temperature and pressure, e.g. at least 50°C, for example 50-2000°C, especially 50-200°C, particularly 100 to 150°C, and for example at least 20 bar, e.g. 20 to 60 bar, especially at least 50 bar. The CO stream may be recycled after deposition of any entrained metal carbonyls at an increased temperature, e.g. 230°C to 400°C. The carbon monoxide is preferably flushed through the CNF and the metal carbonyl is carried away in the carbon monoxide flow. Especially preferably the carbon monoxide flow from the CNF is passed through a bed of a porous particulate catalyst support material (e.g. alumina, silica, titania, etc) so as to generate fresh catalyst for CNF production. The present invention provides a method for removing metal contaminants from carbon nanofibres, said method comprising contacting carbon nanofibres containing residues of metal catalyst with carbon monoxide whereby to form a metal carbonyl and contacting said metal carbonyl with a porous particulate catalyst support material. This involves a method for removing metal contaminants from carbon nanofibres, said method comprising contacting carbon nanofibres with carbon monoxide whereby to form a metal carbonyl and removing said metal carbonyl from the carbon nanofibres and a method for the production of a particulate catalyst for carbon nanofibre production which method comprises contacting a porous particulate catalyst support material, preferably an inorganic oxide (e.g. silica, alumina or titania), with a gas containing a carbonyl compound of a metal effective as a catalyst to produce carbon nanofibres from a hydrocarbon (e.g. methane).

The selection of temperature and pressure etc., can be effected using conventional techniques with reference to known carbonyl volatilisation temperatures and pressures and metal deposition. Details are widely available and may for example be found in Densham et al (1964); "Nickel carbonyl formation in steam reforming processes" Proc. Mat. Tech. Symp. 21-22. 10.64, Pergamon Press, Edited by C. Edelhanu and P. Lian (1989) Diplom Institutt for uorganisk Kjemi, NTH. In general however, it is considered that metal deposition from volatile carbonyls is best effected without change of pressure.

For use in ore reduction, the CNF is preferably pelletized to produce pellets of 1 to 20 mm maximum dimension (e.g. diameter), more preferably 3 to 13 mm. The CNF may be used on its own or in combination with a further carbon material, e.g. coal, coke or charcoal. If used in combination with another carbon material, the CNF preferably constitutes at least 25% wt, more preferably at least 50% wt, especially at least 75% wt, more especially at least 90% wt of the total carbon material. Thus the quantity of CNF in such a combination may be selected such that the overall level of undesired elemental impurities in the carbon material is within the acceptable limits for the particular metal being produced by the reduction reaction. Thus for example for the production of silicon for solar cells, the total phosphorus content in the carbon should be less than 5 ppm (wt), while for the electronics industry it should be below 200 ppm (wt).

Likewise for the production of silicon for the electronics industry, the total boron content of the carbon should be less than 30 ppm (wt).

The ore reduction process of the invention may be effected using the conditions and relative quantities of ore and carbon material conventional for reduction of the same ores using conventional carbon materials, e.g. in furnaces operating at temperatures operating at up to 2000°C or even higher.

The solid carbon product may also be used in the form of agglomerates of the carbon product and one or more ores or minerals. Thus for the production of silicon, agglomerates containing the solid carbon product and quartz may be used.

The CNF used according to the invention is thus preferably physically treated (e.g. by compaction, pelletization, agglomeration, etc.) and/or formulated with other materials, e.g. particulate metal or pseudo metal oxides or sulphides or other ores or minerals, as a further stage of the process.

The invention will now be described further with reference to the following non-limiting Examples which describe the production of CNF usable in the process of the invention.

### Example 1

### CNF Production

Carbon containing gas (90% mol methane and 10% mol hydrogen) at a pressure of 5 bar was introduced at a flow rate of 400 mL/minute and a temperature of 550°C into a horizontal tubular reactor having a conical section increasing in cross-section in the flow direction. Before the reaction began, 0.3g of a aluminium-leached nickel:aluminium intermetal catalyst (Amperkat® SK Ni 3704 from H.C. Starck GmbH & Co KG, Goslar, Germany) was placed at the narrowest point of the reactor. The gas flow was maintained for 30 hours by which time CNF generation had ceased.

### Example 2

### CNF Production

Carbon containing gas (90% mol methane and 10% mol hydrogen) at a pressure of 5 bar was introduced at a flow rate of 400 mL/minute and a temperature of 550°C into a horizontal tubular reactor having a conical section increasing in cross-section in the flow direction. Before the reaction began, 0.3g of a aluminium-leached 68% Nickel/32% Iron:aluminium intermetal catalyst (Amperkat® SK Ni Fe 6816 from H.C. Starck GmbH & Co KG, Goslar, Germany) was placed at the narrowest point of the reactor. The gas flow was maintained for 30 hours by which time CNF generation had ceased.

### Example 3

### CNF Production

0.04g of intermetal catalyst (SK-Ni 5546 from H.C. Starck GmbH & Co KG as described earlier) was placed in a horizontal tubular reactor. The reactor was heated to 480°C with a nitrogen:hydrogen (1:1 by mole) mixture at a rate of 400 C°/hour. Then methane at 480°C and 6 bar was flowed through the reactor for 30 minutes at 1.6 L/min. The reactor temperature was raised to 630°C at 600C°/hour and a gas mixture comprising 1.6 L/min CH₄, 250 mL/min hydrogen and 40 mL/min nitrogen was flowed through the reactor at 630°C and 6 bar for 24 hours. The carbon product yield was in the range 13.6 to 15g C, i.e. 340 to 375 g C/g catalyst. Using a 3 hour production run, 6-8 gC may be produced analogously.

### Example 4

CNF produced according to Example 1 was tested for SiO reactivity. CNF was filled into a reacting chamber.

SiO reactivity was measured by means of a standardized method where a gas mixture consisting of 13.5 % SiO, 4.5 % CO the remainder being argon, at a temperature of about 1650°C is passed through a bed of the material to be tested. When the gas mixture comes into contact with the carbon material in the bed, more or less SiO (g) will react with the carbon to form SiC and CO-gas. The content of CO in the gas mixture which has passed through the carbon materials in the bed is analyzed and the amount of SiO which has reacted with carbon for the formation of SiC is calculated. The amount of SiO which passes the bed unreacted gives a measure for the reactivity as a low amount of SiO reflects a high reactivity while a high amount of SiO reflects a low reactivity. This method is described in the paper "Reactivity of reduction materials in the production of Silicon, Silicon-rich Ferro alloys and Silicon-Carbide" by J.Kr. Tuset and O. Raaness, AIME EI. Furnace Conference, St. Lois, Miss, Dec. 1979.

For the CNF tested in this example a reactivity number of 2100 ml of SiO was obtained. This shows that CNF has about the same SiO reactivity as petrol coke which to day is used as a reduction material in the carbothermic production of silicon from quartz.

This example shows that CNF is well suited as a carbon reduction material in the production of metals and alloys.

### Example 5

### Removal of contaminants from CNF

CNF produced according to Example 1 is treated as follows. The CNF is contacted with carbon monoxide at 150°C and at 50 bar. The carbon monoxide is flushed through the CNF and the metal carbonyls formed are carried away in the carbon monoxide flow. The gas coming off is sampled spectroscopically and when no further metal carbonyls are seen to be coming off, the treatment is terminated.

### Example 6

### Production of particulate catalyst for CNF production

The carbon monoxide flow from the CNF of Example 5 is heated to 250°C and passed through a bed of cooled porous (e.g. calcined) silica under reduced pressure. Fresh catalyst for CNF production is generated.

### Example 7

### Removal of contaminants from CNF

CO with a concentration 2-100%, and for example with 100-150°C temperature at 50 bar is flushed through the CNF. The CO contact time with the CNF bed should be chosen high enough to approach eqilibrium with the carbonyl concentration in the qas phase. The metal carbonyl formed is carried away with the off gas (CO + possible dilution gas). With sufficient pressure reduction and/or temperature increase the carbonyl concentration in the gas is no longer thermodynamically stable and thus the carbonyl will decompose into CO and metal (Ni, Fe). The carbonyl decomposition and thus metal deposition could be done on a high surface area carrier material for the purpose of CNF catalyst production or regeneration. Carbonyl decomposition could be performed at for example greater than 250°C and with for example a reduced pressure less than 10 bar (see equilibrium curves in Densham et al (1964); "Nickel carbonyl formation in steam reforming processes" Proc. Mat. Tech. Symp. 21-22. 10.64, Pergamon Press, Edited by C. Edelhanu and P. Lian (1989) Diplom Institutt for uorganisk Kjemi, NTH.)

Example 7 may be repeated with CO at greater than 50 bar. Temperature increase to above 250°C and pressure reduction to under 50 bar effects the carbonyl decomposition. Carbonyl decomposition could be performed at greater than 250°C and at constant high pressure (40-50 bar). However, reduced pressure (less than 50 bar) in combination with increased temperature (to over 250°C) should increase carbonyl decomposition further.

## Claims

1. A method for the production of a particulate catalyst, said method comprising contacting carbon nanofibres containing residues of metal catalyst with carbon monoxide whereby to form a metal carbonyl and contacting said metal carbonyl with a porous particulate catalyst support material.

2. A method as claimed in claim 1, wherein said carbon nanofibres are contacted with carbon monoxide at elevated temperature and pressure.

3. A method as claimed in either of claims 1 or 2 wherein said carbon nanofibres are contacted with carbon monoxide at least 50°C and at at least 20 bar.

4. A method as claimed in any one of the preceding claims wherein said carbon nanofibres are contacted with carbon monoxide at between 50 and 200°C and between 30 and 60 bar.

5. A method as claimed in claim 1 wherein said catalyst support material is an inorganic oxide.

6. A method as claimed in claim 1 or claim 5 wherein said catalyst support material comprises silica, alumina or titania.

7. A method as claimed in any one of claims 1 to 4 wherein said metal catalyst is a supported catalyst.

8. A method as claimed in any one of claims 1 to 4 wherein said metal catalyst is an unsupported catalyst.

9. A method as claimed in claim 7 wherein said supported catalyst is a silica-supported catalyst.

10. A method as claimed in any one of claims 1 to 9 wherein said catalyst metal comprises at least one element selected from nickel and iron.

## Patentansprüche

1. Verfahren zur Herstellung eines teilchenförmigen Katalysators, wobei man Kohlenstoffnanofasem, die Rückstände eines Metallkatalysators enthalten, mit Kohlenmonoxid in Kontakt bringt, um dadurch ein Metallcarbonyl zu bilden, und das Metallcarbonyl mit einem porösen teilchenförmigen Katalysatorträgermaterial in Kontakt bringt.

2. Verfahren nach Anspruch 1, wobei man die Kohlenstoffnanofasern bei erhöhter Temperatur und Druck mit Kohlenmonoxid in Kontakt bringt.

3. Verfahren nach Anspruch 1 oder 2, wobei man die Kohlenstoffnanofasem bei wenigstens 50 °C und bei wenigstens 20 bar mit Kohlenmonoxid in Kontakt bringt.

4. Verfahren nach einem der vorhergehenden Ansprüche, wobei man die Kohlenstoffnanofasem bei 50 bis 200 °C und 30 bis 60 bar mit Kohlenmonoxid in Kontakt bringt.

5. Verfahren nach Anspruch 1, wobei es sich bei dem Katalysatorträgermaterial um ein anorganisches Oxid handelt.

6. Verfahren nach Anspruch 1 oder 5, wobei das Katalysatorträgermaterial Siliziumdioxid, Aluminiumoxid oder Titandioxid umfasst.

7. Verfahren nach einem der Ansprüche 1 bis 4, wobei es sich bei dem Metallkatalysator um einen geträgerten Katalysator handelt.

8. Verfahren nach einem der Ansprüche 1 bis 4, wobei es sich bei dem Metallkatalysator um einen ungeträgerten Katalysator handelt.

9. Verfahren nach Anspruch 7, wobei es sich bei dem geträgerten Katalysator um einen Siliziumdioxid-geträgerten Katalysator handelt.

10. Verfahren nach einem der Ansprüche 1 bis 9, wobei das Katalysatormetall wenigstens ein unter Nickel und Eisen ausgewähltes Element umfasst.

## Revendications

1. Procédé de production d'un catalyseur en particules, ledit procédé comportant la mise en contact de nanofibres de carbone contenant des résidus d'un catalyseur métallique avec du monoxyde de carbone de manière à former un métalcarbonyle et à mettre en contact ledit métalcarbonyle avec un matériau support poreux de catalyseur en particules.

2. Procédé selon la revendication 1, dans lequel lesdites nanofibres de carbone sont mises en contact avec le monoxyde de carbone à une température et une pression élevées.

3. Procédé selon l'une quelconque des revendications 1 ou 2, dans lequel lesdites nanofibres de carbone sont mises en contact avec le monoxyde de carbone à au moins 50°C et au moins 20 bar.

4. Procédé selon l'une quelconque des revendications précédentes, dans lequel lesdites nanofibres de carbone sont mises en contact avec le monoxyde de carbone entre 50°C et 200°C et entre 30 et 60 bar.

5. Procédé selon la revendication 1, dans lequel le matériau support de catalyseur est un oxyde organique.

6. Procédé selon la revendication 1 ou la revendication 5, dans lequel ledit matériau support de catalyseur comporte de la silice, de l'alumine ou du titane.

7. Procédé selon l'une quelconque des revendications 1 à 4, dans lequel ledit catalyseur métallique est un catalyseur supporté.

8. Procédé selon l'une quelconque des revendications 1 à 4, dans lequel ledit catalyseur métallique est un catalyseur non supporté.

9. Procédé selon la revendication 7, dans lequel ledit catalyseur supporté est un catalyseur supporté par de la silice.

10. Procédé selon l'une quelconque des revendications 1 à 9, dans lequel ledit métal du catalyseur comporte au moins un élément sélectionné parmi le nickel et le fer.
